# FASCICULE DE BREVET EUROPEEN

(11) **EP 0 501 873 B1**
(45) Date de publication et mention de la délivrance du brevet: **03.05.1995**
(21) Numéro de dépôt: 92400483.1
(22) Date de dépôt: 25.02.1992
(51) Int. Cl.: B23K 9/20

(54) **Dispositif pour souder des goujons à distance à l'aide d'un pistolet télémanipulable**
Einrichtung zum Fernbolzenschweissen mit einer fernbedienbaren Pistole
Apparatus for remotely stud welding with a remotely by controllable welding gun

(30) Priorité: 27.02.1991 FR 9102341
(43) Date de publication de la demande: 02.09.1992
(73) Titulaire: COMMISSARIAT A L'ENERGIE ATOMIQUE, 75015 Paris (FR)
(72) Inventeur: Gerenton, Jacques, F-07700 St Marcel d'Ardeche (FR); Girard, Dominique, F-30400 Villeneuve les Avignon (FR); Romanet, Lucien, F-36130 St-Paul-Trois Chateaux (FR); Streiff, Gérard, F-30650 Saze (FR)
(74) Mandataire: Dubois-Chabert, Guy

(56) Documents cités:
- CH-A- 435 481
- DE-A- 2 614 655
- FR-A- 2 212 209
- GB-A- 1 146 332
- US-A- 3 096 429

## Description

La présente invention concerne un dispositif pour souder des goujons à distance utilisant un pistolet à souder télémanipulable et un poste de soudage. Elle permet de souder en télémanipulation avec une seule manoeuvre d'un télémanipulateur. Certains perfectionnements de l'invention permettent, de plus, des interventions de maintenance ainsi qu'un chargement aisé des goujons à souder.

L'invention s'applique à tous les domaines nécessitant des soudages de goujons à distance et plus particulièrement dans le domaine du nucléaire où certaines zones sont interdites aux individus, à cause des risques d'irradiation.

En général, les dispositifs pour souder des goujons à distance nécessitent plusieurs télémanipulateurs ou, tout au moins, un certain nombre de manoeuvres dans le cas où l'on ne dispose que d'un seul télémanipulateur. En effet, souder sur une surface conductrice, nécessite de relier électriquement le dispositif à ladite surface pour y souder un goujon. Selon les dispositifs connus, cette liaison électrique se fait grâce à deux serre-joints reliés à la masse électrique du poste de soudage.

Un tel dispositif de soudage existe sous les marques déposées TRW NELSON NS 30B-4, pour le pistolet et TRW NELSON GB-1301, pour le poste de soudage.

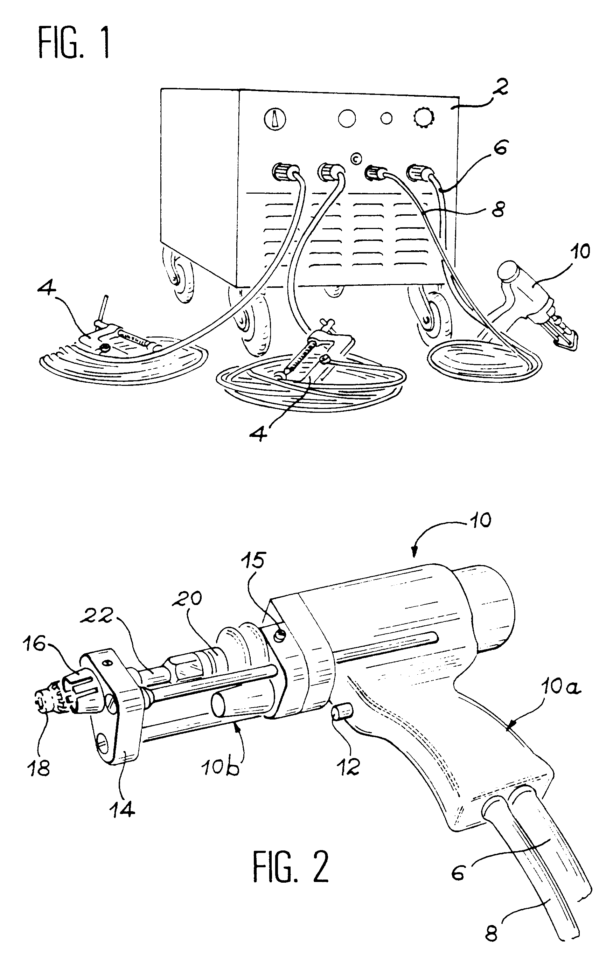

Les figures 1 et 2 annexées montrent une représentation schématique d'un dispositif selon l'art antérieur. Les figures 1 et 2 représentent respectivement un schéma du poste de soudage et du pistolet selon l'art antérieur.

Le poste de soudage 2, montré sur la figure 1, comporte deux serre-joints 4 reliés à la masse électrique du dispositif par deux câbles de masse, un câble de puissance 6 qui assure au pistolet 10 une alimentation électrique fournie par le poste de soudage 2, et un câble de commande 8 qui assure la transmission, jusqu'au pistolet 10, des informations de commande en provenance du poste de soudage 2.

Le pistolet 10 à souder, montré sur la figure 2, comporte deux parties principales : une crosse 10a et un canon 10b. La crosse 10a est reliée, par son extrémité inférieure, aux câbles de puissance 6 et de commande 8.

Une gachette de déclenchement 12, située sur la crosse 10a du pistolet 10, permet, lorsqu'une pression est exercée sur ladite gachette 12, de mettre en action ledit pistolet 10 pour souder un goujon.

Le canon 10b du pistolet comprend, à son extrémité, une semelle en bakélite 14 sur laquelle est fixé un porte-bague 16. Ce porte-bague permet de recevoir une bague réfractaire 18 dans lequel se tient le goujon à souder. Le canon 10b comporte également un dispositif mobile 20 supportant un mandrin porte-goujons 22.

Avant toute utilisation, le pistolet nécessite certains réglages, ces réglages dépendant notamment du type de goujons à souder et de la taille dudit goujon (diamètre et longueur). Ces réglages concernent notamment l'amorçage et la plongée du goujon.

On entend, par "amorçage" du goujon, la hauteur dont s'élève le goujon par rapport à la surface support sur laquelle doit être soudé ledit goujon, ce qui détermine la longueur de l'arc.

De même, il faut comprendre par "plongée", la longueur dont fond le goujon sous l'effet de la chaleur.

Les réglages de l'amorçage et de la plongée sont effectués, respectivement, en serrant plus ou moins une vis située à l'arrière du canon 10b du pistolet, mais non représentée sur les figures, et en déplaçant la semelle en bakélite 14, grâce à des moyens 15 de blocage, de sorte que le goujon dépasse plus ou moins de la bague réfractaire 18 supportée par le porte-bague 16.

D'autres paramètres, tels que la durée et l'intensité du soudage, peuvent nécessiter des réglages durant l'utilisation du dispositif ; ces paramètres sont cependant réglables à partir du poste de soudage 2 ; ils peuvent donc être modifiés à tout moment, même lors de la télémanipulation du pistolet 10.

Lorsque les réglages nécessaires ont été effectués, la bague réfractaire 18 et le goujon sont mis en place sur le canon 10b du pistolet. Les deux serre-joints 4 sont alors fixés sur la surface support ; lorsque la surface support le permet, les serre-joints 4 sont placés symétriquement par rapport à l'endroit où doit être soudé le goujon. Lesdits serre-joints 4 fixés, le pistolet 10 est dirigé vers la surface support et le goujon est appliqué fermement à l'endroit où il doit être fixé. On peut alors déclencher la soudure dudit goujon en appuyant sur la gachette 12 de déclenchement.

Les étapes de soudage consécutives à cette mise en action du pistolet 10 sont les suivantes : positionnement du goujon, amorçage du goujon, déclenchement de l'arc et plongée du goujon.

Un dispositif, tel que décrit ci-dessus, comporte deux nombreux inconvénients, l'un d'eux étant la nécessité de dévisser, puis revisser chaque serre-joint, pour chaque soudure de goujon sur une surface support électriquement isolée de la précédente. Un autre inconvénient concerne le soudage sur des surfaces support étroites, ces surfaces ne permettant pas, ou difficilement, une disposition symétrique des serre-joints. Enfin, un tel dispositif nécessite généralement de disposer de plusieurs télémanipulateurs pour, à la fois, tenir et visser le serre-joint.

Un autre dispositif connu pour souder des goujons est décrit dans la demande de brevet DE-2 614 655. Ce dispositif comporte un pistolet de soudage sur lequel sont embarquées des masses électriques.

Ce dispositif a également pour inconvénient de nécessiter l'emploi de plusieurs télémanipulateurs pour, à la fois, tenir et visser le serre-joint ainsi que pour déclencher le pistolet.

La présente invention permet justement de remédier à ces inconvénients.

En effet, elle a pour objet un dispositif pour souder des goujons à distance a l'aide d'un pistolet pouvant être télémanipulé au moyen d'un seul télémanipulateur.

De façon plus précise, l'invention concerne un dispositif pour souder des goujons à distance à l'aide d'un pistolet télémanipulable, muni d'un canon, d'une crosse et d'une commande de mise en action, ainsi que d'un poste de soudage, relié électriquement à la surface support de soudage par des masses électriques embarquées sur le pistolet.

Avantageusement, la commande de mise en action du pistolet est réalisée par une pédale de déclenchement connectée au poste de soudage.

Selon l'invention, chaque masse électrique comporte chacune une tige coulissante montée sur des moyens élastiques à l'intérieur d'un coulisseau.

De plus, les masses électriques sont disposées symétriquement autour d'un porte-bague monté sur un support fixé sur le canon du pistolet.

Selon un mode de réalisation de l'invention, le porte-bague et le support sont maintenus, à une extrémité du canon du pistolet, de façon amovible par des moyens de blocage afin d'assurer une maintenance à distance dudit pistolet.

Un perfectionnement de l'invention consiste en l'existence de hottes de préhension sur le pistolet, lesdites hottes étant aptes à recevoir des moyens de télémanipulation.

Selon un mode de réalisation préféré de l'invention, le dispositif comporte un support de pistolet contenant un magasin de goujons et de bagues réfractaires, ainsi que des outils de maintenance, ledit support étant apte à recevoir le pistolet pour assurer une alimentation à distance des goujons et bagues réfractaires et assurer la maintenance du pistolet.

Selon un perfectionnement de l'invention, le dispositif comporte, entre le poste de soudage et le pistolet, un enrouleur de câbles électriques assurant au pistolet une autonomie de plusieurs dizaines de mètres de câble.

D'autres caractéristiques et avantages de l'invention ressortiront mieux de la description qui va suivre, donnée à titre illustratif et non limitatif, en référence aux dessins dans lesquels :
- la figure 1, déjà décrite, représente un dispositif de soudage selon l'art antérieur ;
- la figure 2, également décrite dans les pages précédentes, est une représentation schématique du pistolet à souder utilisé dans l'art antérieur ;
- la figure 3 représente l'ensemble du dispositif selon l'invention ;
- la figure 4 montre schématiquement le pistolet à souder selon l'invention ;
- la figure 5 représente de façon schématique une masse électrique embarquée sur le pistolet de la figure 4.

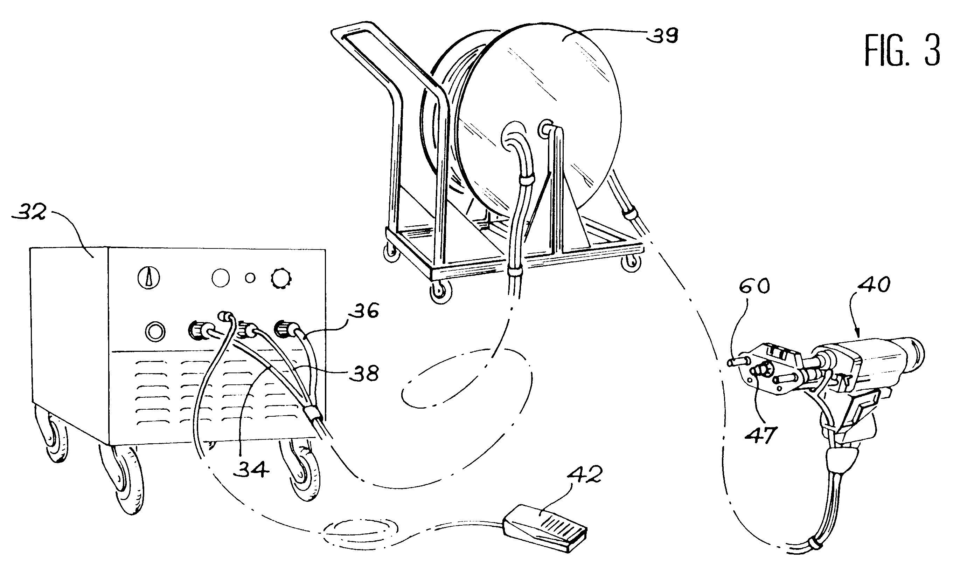

La figure 3 représente de façon schématique l'ensemble des éléments constituant le dispositif selon l'invention. En comparant ce dispositif au dispositif de l'art antérieur, montré sur la figure 1, on remarque que le poste de soudage 32 comporte toujours un câble de puissance 36 et un câble de commande 38 reliés au pistolet 40 ; néanmoins, il ne comporte qu'un seul câble de masse 34, également relié au pistolet 40. Le poste de soudage 32 comprend de plus une pédale de déclenchement 42 permettant de déclencher le soudage, c'est-à-dire de mettre en action le pistolet à souder 40. Cette pédale de déclenchement 42 remplace efficacement la gachette de déclenchement 12, montrée sur la figure 2, en permettant à l'utilisateur d'actionner le pistolet 40 à distance, c'est-à-dire à partir du poste de soudage et non par l'intermédiaire d'un télémanipulateur.

Cette pédale de déclenchement 42 assure ainsi une simplification des manoeuvres de télémanipulation, puisqu'effectuée par l'utilisateur.

Un mode de réalisation préféré de l'invention consiste à introduire, entre le poste de soudage 32 et le pistolet 40, un enrouleur 39. Les câbles de commande 38, de puissance 36 et de masse 34, sont assemblés sur toute leur distance entre le poste de soudage 32 et le pistolet 40 et sont enroulés autour de l'enrouleur 39. Cet enroulement permet une longueur de câble plus importante et donc une plus grande indépendance du pistolet 40.

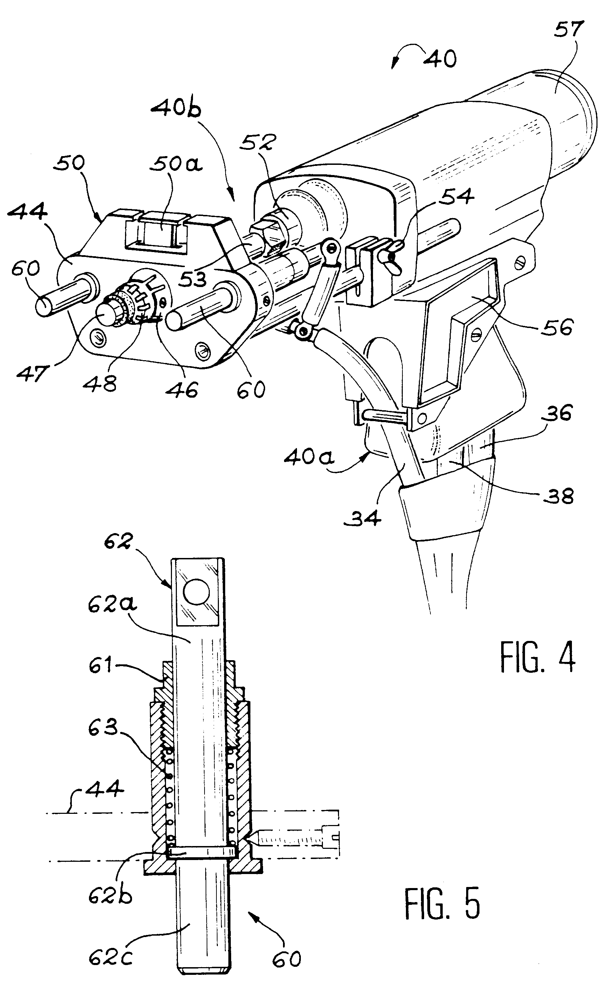

La figure 4 représente, sous forme de schéma, le pistolet à souder selon l'invention. La crosse 40a du pistolet 40 est relié, à son extrémité inférieure, aux câbles de puissance 36 et de commande 38. A ce niveau du dispositif, le câble de masse 34 est séparé de l'ensemble des câbles (34, 36, 38) pour être amené vers le canon 40b du pistolet 40.

Le canon 40b dudit pistolet comprend, dans son ensemble, les mêmes éléments que le canon 10b de la figure 2. Il comporte cependant, sur un support 44 qui est, par exemple une semelle en bakélite, deux masses électriques 60 placées de part et d'autre du porte-bague 46 et, par conséquent, du goujon 47 puisque ledit goujon 47, placé à l'intérieur de la bague réfractaire 48, est porté par le mandrin porte-goujons 53. Ces deux masses électriques 60 sont symétriques l'une de l'autre par rapport au goujon 47, cette symétrie limitant les risques de soufflage magnétique, ce qui garantit une bonne soudure. Ces deux masses 60 sont reliées à la masse du dispositif par l'intermédiaire du câble de masse 34 auquel elles sont connectées.

Selon l'art antérieur, le porte-bague 16 était fixé à la semelle en bakélite 14 par une vis. Selon l'invention, le porte-bague 46 est fixé à la semelle en bakélite 44 par des moyens de blocage 50. Ces moyens de blocage 50 comportent notamment un pion de biocage 50a amovible : lorsque ledit pion de blocage 50a est inséré dans les moyens de blocage 50, il permet de fixer le porte-bague 46 ; lorsque ledit pion de blocage 50a est reculé, le porte-bague 46 peut alors être retiré et remplacé par un autre si, par exemple, il est usé. Cette manoeuvre de changement du porte-bague 46 peut être facilement exécutée en télémanipulation, contrairement au vissage/dévissage, tel que pratiqué dans l'art antérieur.

De plus, selon l'invention, les moyens 54 de blocage de la semelle en bakélite 44 sont également simplifiés. En effet, dans le mode de réalisation préféré de l'invention, un seul type de goujon est utilisé, à savoir le goujon M12 qui est courant dans le domaine nucléaire. Ce choix permet la simplification desdits moyens 54 de blocage de la semelle en bakélite, car il n'est plus nécessaire de régler la semelle pour faire varier la plongée des différents types de goujons. Les moyens 54 de blocage ont donc un rôle simplifié qui consiste uniquement à permettre le démontage/remontage de la semelle 44 nécessaire pour changer le mandrin porte-goujons 53 lorsqu'il est défectueux.

Selon un mode de réalisation de l'invention, les moyens 54 de blocage de la semelle comporte une vis avec écrou papillon facilement dévissable.

Dans un but pratique, le pistolet 40 selon l'invention comporte, de part et d'autre de la crosse 40a, des hottes de préhension 56 permettant un bon maintien du pistolet 40 par le télémanipulateur.

Dans un but de faciliter le chargement du pistolet en bagues réfractaires et en goujons ou dans un but de maintenance par télémanipulateur, un perfectionnement de l'invention consiste à emboîter l'extrémité 57 du canon 40b dans un support de pistolet non représenté sur la figure. Ce support de pistolet comporte un magasin de goujons et de bagues réfractaires, ainsi que des outils nécessaires à la maintenance du pistolet.

La figure 5 représente, de façon schématique, une masse électrique embarquée sur le pistolet à souder les goujons. Cette masse 60 comporte un coulisseau 61 à l'intérieur duquel se déplace rectilignement une tige 62. Cette tige 62 comporte une partie 62a intérieure au coulisseau 61, une partie 62c extérieure audit coulisseau 61 et un disque 62b de diamètre supérieur aux parties 62a et 62c de la tige. Autour de la tige 62a, un ressort, sur lequel s'appuie le disque 62b, assure le mouvement rectiligne de la tige 62 et un contact électrique de la partie 62c de la tige avec la surface support de soudage.

Grâce à ces masses électriques embarquées, il est possible, et facile, de souder des goujons sur une surface, puis sur une autre électriquement isolée de la première sans aucun démontage des masses.

De plus, comme les paramètres liés au pistolet ont été déterminés par des essais hors de la zone dangereuse, une fois le pistolet introduit dans ladite zone, toutes les opérations de soudage et de maintenance peuvent être effectuées à distance. Les seuls réglages et commandes nécessaires en cours de manoeuvre sont effectués à partir du poste de soudage, donc directement par l'utilisateur.

Ainsi, outre les avantages décrits précédemment, le dispositif selon l'invention permet essentiellement une indépendance du pistolet lorsqu'il est en zone d'accès dangereux.

## Revendications

1. Dispositif pour souder des goujons à distance à l'aide d'un pistolet (40) télémanipulable, muni d'un canon (40b), d'une crosse (40a) et d'une commande de mise en action, ainsi que d'un poste de soudage (32), relié électriquement à la surface de soudage par des masses électriques (60) embarquées sur le pistolet, caractérisé en ce que chaque masse électrique comporte une tige (62) coulissante montée sur des moyens élastiques (63) à l'intérieur d'un coulisseau (61).

2. Dispositif selon la revendication 1, caractérisé en ce que la commande de mise en action du pistolet est réalisée par une pédale de déclenchement (42) connectée au poste de soudage.

3. Dispositif selon l'une quelconque des revendications 1 et 2, caractérisé en ce que les masses électriques sont disposées symétriquement autour d'une bague réfractaire (48) emboîtée sur un porte-bague (46) monté sur un support (44) fixé sur le canon du pistolet.

4. Dispositif selon la revendication 3, caractérisé en ce que te porte-bague (46) et le support (44) sont maintenus, à une extrémité du canon du pistolet, de façon amovible par des moyens de blocage (50, 54) afin d'assurer une maintenance à distance dudit pistolet.

5. Dispositif selon l'une quelconque des revendications 1 à 4, caractérisé en ce que le pistolet comporte des hottes de préhension (56) aptes à recevoir des moyens de télémanipulation.

6. Dispositif selon l'une quelconque des revendications 1 à 5, caractérisé en ce qu'il comporte un support de pistolet contenant un magasin de goujons et de bagues réfractaires, ainsi que des outils de maintenance, ledit support étant apte à recevoir l'extrémité (57) du canon 40b pour faciliter une alimentation à distance des goujons et bagues réfractaires et assurer la maintenance du pistolet.

7. Dispositif selon l'une quelconque des revendications 1 à 6, caractérisé en ce qu'il comporte, entre le poste de soudage et le pistolet, un enrouleur (39) de câbles électriques assurant au pistolet une autonomie de plusieurs dizaines de mètres de câble.

## Claims

1. Apparatus for remotely welding studs with the aid of a remotely manipulatable gun (40), provided with a barrel (40b), a grip (40a) and an actuation control, as well as a welding station (32) electrically connected to the welding surface by electric earths (60) carried on the gun, characterized in that each electric earth has a sliding rod (62) mounted on elastic means (63) within a slide (61).

2. Apparatus according to claim 1, characterized in that the actuation control of the gun is provided by a starting pedal (42) connected to the welding station.

3. Apparatus according to either of the claims 1 and 2, characterized in that electric earths are arranged symmetrically around a refractory ring (48) fitted to a ring holder (46) mounted on a support (44) fixed to the gun barrel.

4. Apparatus according to claim 3, characterized in that the ring holder (46) and support (44) are detachably held at one end of the gun barrel by locking means (50, 34), in order to ensure a remote maintenance of the gun.

5. Apparatus according to any one of the claims 1 to 4, characterized in that the gun has gripping hoods (56) able to receive remote manipulation means.

6. Apparatus according to any one of the claims 1 to 5, characterized in that it has a gun support containing a magazine for studs and refractory rings, together with maintenance tools, said support being able to receive the end (57) of the barrel (40b) to facilitate a remote supply of studs and refractory rings and ensure gun maintenance.

7. Apparatus according to any one of the claims 1 to 6, characterized in that, between the welding station and the gun, it has an electric cable drum (39) giving the gun an autonomy of several dozen metres of cable.

## Patentansprüche

1. Einrichtung zum Fernbolzenschweißen mit einer fernbedienbaren Pistole (40), versehen mit einer Kanone (40b), einem Griff (40a) und einer Betätigungssteuerung, sowie einer Schweißstation (32), elektrisch verbunden mit der Schweißoberfläche durch elektrische Massen (60), auf der Pistole enthalten,
**dadurch gekennzeichnet,**
daß jede elektrische Masse innerhalb einer Gleitführung (61) eine gleitende Stange (62) umfaßt, angebracht an elastischen Einrichtungen (63).

2. Vorrichtung nach Anspruch 1, dadurch gekennzeichnet, daß die Betätigungssteuerung der Pistole durch ein Auslösungspedal (42) erfolgt, verbunden mit der Schweißstation.

3. Vorrichtung nach einem der Ansprüche 1 und 2, dadurch gekennzeichnet, daß die elektrischen Massen symetrisch um einen hitzebeständigen Ring (48) angeordnet sind, der eingefügt ist in einen Ringhalter (46), angebracht auf einem an der Kanone der Pistole befestigten Träger (44).

4. Vorrichtung nach Anspruch 3, dadurch gekennzeichnet, daß der Ringhalter (46) und der Träger (44) an einem Ende der Kanone der Pistole lösbar festgehalten werden durch Blockierungseinrichtungen (50, 54), um eine Abstandshaltung der Pistole zu gewährleisten.

5. Vorrichtung nach einem der Ansprüche 1 bis 4, dadurch gekennzeichnet, daß die Pistole Greifnischen (56) umfaßt, geeignet für die Aufnahme von Fernbedienungseinrichtungen.

6. Vorrichtung nach einem der Ansprüche 1 bis 5, dadurch gekennzeichnet, daß sie einen Pistolenträger umfaßt, der ein Magazin für Bolzen und hitzebständige Ringe enthält sowie Werkzeuge zum Festhalten, wobei der genannte Träger geeignet ist zur Aufnahme des Endes (57) der Kanone (40b), um eine Fernversorgung mit Bolzen und hitzebeständigen Ringen zu erleichtern und den Halt der Pistole zu sichern.

7. Vorrichtung nach einem der Ansprüche 1 bis 6, dadurch gekennzeichnet, daß sie zwischen der Schweißstation und der Pistole eine Aufwickeleinrichtung (39) für die elektrischen Kabel umfaßt, die für die Pistole eine Kabelversorgung von mehrmals zehn Metern gewährleistet.
